# EUROPÄISCHE PATENTSCHRIFT

(11) **EP 2 754 842 B1**
(45) Veröffentlichungstag und Bekanntmachung des Hinweises auf die Patenterteilung: **29.06.2016**
(21) Anmeldenummer: 13195646.8
(22) Anmeldetag: 04.12.2013
(51) Int. Cl.: E06B 7/23, E06B 3/976, E06B 1/36, E06B 1/52, E06B 3/263, E06B 3/96

(54) **Dichtungsprofil für ein Rahmenprofil und Rahmenprofil**
Sealing profile for a frame profile and frame profile
Profil d'étanchéité pour un profil de cadre et profil de cadre

(30) Priorität: 11.01.2013 DE 102013100242
(43) Veröffentlichungstag der Anmeldung: 16.07.2014
(73) Patentinhaber: SCHÜCO International KG, 33609 Bielefeld (DE)
(72) Erfinder: Hausbrock, Dietmar, Dr., 33604 Bielefeld (DE); Ferrari-Hoh, Sebastian, 33609 Bielefeld (DE); Matthies, Danijel, 33775 Versmold (DE); Nienhüser-Sonnenschein, Rolf, 49324 Melle (DE); El Fartoukh, Abdelaziz, 33609 Bielefeld (DE)
(74) Vertreter: Dantz, Jan Henning

(56) Entgegenhaltungen:
- EP-A1- 1 972 749
- EP-A2- 2 196 614
- DE-A1- 4 321 702
- DE-A1-102005 044 421
- DE-C2- 2 460 417
- DE-U- 1 772 234
- DE-U1-202010 008 921

## Beschreibung

Die vorliegende Erfindung betrifft ein Dichtungsprofil für ein Rahmenprofil, insbesondere eine Mitteldichtung, mit einer ersten Wand, an der ein Fußteil zur Fixierung an einem Rahmenprofil ausgebildet ist, und einer zweiten Wand, die von der ersten Wand beabstandet angeordnet ist und über mehrere Zwischenwände mit der ersten Wand verbunden ist.

Die DE 20 2010 008 921 offenbart eine Mitteldichtung für ein Fenster oder eine Tür, bei der zwei Verankerungsfüße vorgesehen sind, um die Mitteldichtung an einem Blendrahmen zu fixieren. Auf der zum Flügelrahmen gewandten Seite steht eine Dichtlippe hervor, die für eine Abdichtung sorgt.

In der DE 43 21 702 ist ein Rahmen für ein Fenster offenbart, an dem eine Mitteldichtung vorgesehen ist. Die Mitteldichtung weist eine hervorstehende Dichtlippe auf, die mit einem Anschlag zusammenwirkt.

Aus der DE 10 2005 044 421 ist eine Dichtung für ein Fenster bekannt, bei der ein Profilfuß an einer Nut fixiert ist. Die Dichtung weist eine Hohlkammer auf und gewährleistet dadurch eine gewisse Elastizität einer hervorstehenden Rippe.

Aus der DE 24 60 417 ist ein Verfahren zum Formen einer scharfen Ecke eines Dichtungsstreifens bekannt, bei dem in dem Dichtungsstreifen eine Aussparung vorgesehen wird, um dort ein Eckteil zu fixieren.

In der DE 17 72 234 ist eine Eckverbindung für einen Rahmen gezeigt, bei der ein Einsteckwinkel gezeigt ist.

Die EP 1 972 249 offenbart ein Fenster mit einem Rahmen, bei dem im Eckbereich ein Eckteil vorgesehen ist.

Die EP 1 811 117 offenbart ein Dichtungsprofil für ein Rahmenprofil, das über ein Fußteil an einem Steg des Rahmenprofiles festlegbar ist. Auf der vom Fußteil abgewandten Seite ist ein Kopfteil vorgesehen, an dem seitlich hervorstehende Dichtlippen ausgebildet sind. Die Dichtlippen liegen in einer Schließposition eines Flügelrahmenprofils an einer Anlagekante an und werden gegen das Kopfteil verschwenkt. Bei solchen dünnwandigen Dichtlippen ist nachteilig, dass die Rückstellkräfte vergleichsweise gering sind und im Laufe der Zeit reduziert werden. Dies kann zur Beeinträchtigung der Abdichtung führen.

Die EP 2 196 614 offenbart ein Dichtungsprofil für ein Rahmenprofil einer Fenster- oder Türkonstruktion, bei dem ein Fußteil an dem Rahmenprofil festlegbar ist. Das Dichtungsprofil besteht aus einem geschäumten Material und ist im Wesentlichen als Vollprofil ausgebildet, wobei oberhalb des Fußteils ein wulstförmiger Dichtvorsprung ausgebildet ist. Der wulstförmige Dichtvorsprung ist dabei direkt auf dem Fußteil abgestützt und besitzt nur eine geringe Elastizität. Bei einer Schließbewegung eines Flügelrahmens kann es allerdings vorkom men, dass der wulstförmige Dichtvorsprung verschwenkt wird, was aufgrund der Scherkräfte zu hohen Schließkräften führt.

Es ist daher Aufgabe der vorliegenden Erfindung, ein Dichtungsprofil für ein Rahmenprofil sowie ein entsprechendes Rahmenprofil zu schaffen, bei dem eine zuverlässige Abdichtung und ausreichend hohe, aber nicht zu hohe, Rückstellkräfte über eine lange Zeitdauer gewährleistet werden können.

Diese Aufgabe wird mit einem Dichtungsprofil mit den Merkmalen des Anspruches 1 gelöst.

Bei dem erfindungsgemäßen Dichtungsprofil ist an der zweiten Wand ein wulstförmiger Dichtvorsprung ausgebildet und die zweite Wand mit dem wulstförmigen Dichtvorsprung ist über die Zwischenwände relativ zu der ersten Wand verschwenkbar gelagert. Dadurch ergibt sich eine ausreichende Beweglichkeit des wulstförmigen Dichtvorsprunges über die parallelogrammartige Anlenkung der Zwischenwände an der ersten Wand, ohne dass die Rückstellkräfte zu groß werden. Auch größere Schließwege, die aufgrund von Toleranzen beim Schließen eines Flügelrahmenprofils auftreten können, werden durch den Dichtvorsprung problemlos überbrückt, da der wulstförmige Dichtvorsprung über die Anlenkung der Zwischenwände deutlich flexibler ist als ein am Fußteil abgestützter Dichtvorsprung aus einem geschäumten Material. Zudem sind die Rückstellkräfte an dem Dichtvorsprung höher als bei einer dünnwandigen Dichtlippe, deren Elastizität im Laufe der Zeit nachlässt, was die Rückstellkräfte verringert, denn die mehreren Zwischenwände sorgen zusammen für ausreichende Rückstellkräfte auch nach einer längeren Zeitdauer.

Durch die Zwischenwände ist das Dichtungsprofil als Hohlkammerprofil ausgebildet, wobei in den Hohlkammern ein leicht komprimierbares Material oder ein Fluid, insbesondere Luft vorgesehen ist. Durch die Hohlkammern wird die Elastizität des Dichtungsprofils in Schließrichtung erhöht, wobei die Anzahl der Hohlkammern an den jeweiligen Einsatzzweck angepasst werden kann. Nicht alle Zwischenwände müssen beidseitig mit der ersten und der zweiten Wand verbunden sein. Durch die Anzahl der beidseitig oder nur einseitig verbundenen Zwischenwände kann die Rückstellkraft eingestellt werden.

Vorzugsweise ist mindestens eine Trennwand vorgesehen, die in einen Innenraum des Dichtungsprofils hervorsteht und nur mit der ersten oder der zweiten Wand verbunden ist. Durch eine solche nur einseitig verbundene Trennwand wird zwar die Wärmedämmung erhöht, aber nicht die Rückstellkräfte bei einem Verschieben des Dichtvorsprungs.

Als wulstförmiger Dichtvorsprung im Sinne der Erfindung kann eine Materialverdickung angesehen werden, die an der zweiten Wand angeformt ist und mit einem Anlagefläche eines relativ zum Dichtungsprofil bewegbaren Bauteils zusammenwirkt. Der Dichtvorsprung kann aufgrund der Elastizität des Materials in gewissem Maße komprimierbar sein, ist aber nicht wie eine dünnwandige Dichtlippe nur verschwenkbar.

Vorzugsweise weist der wulstförmige Dichtvorsprung eine gerundete Anlagekante auf. Die Anlagekante kann dabei seitlich an dem Dichtvorsprung ausgebildet sein und mit einer Kontaktfläche an einem Flügelrahmen zusammenwirken.

Gemäß einer bevorzugten Ausgestaltung der Erfindung sind der wulstförmige Dichtvorsprung und das Fußteil in Längsrichtung des Dichtungsprofils gesehen auf derselben Seite des Dichtungsprofils angeordnet. Im Querschnitt gesehen können somit Dichtvorsprung und Fußteil zusammen auf der linken oder der rechten Seite oder mittig angeordnet sein. Dadurch werden die Zugbelastungen auf das Fußteil gering gehalten. Vorzugsweise kann auch eine Zwischenwand im Wesentlichen senkrecht zu der ersten Wand und der zweiten Wand ausgerichtet sein und diese Zwischenwand verbindet die einander zugewandten Innenseiten des wulstförmigen Dichtvorsprunges mit dem Fußteil. Dadurch ist gewährleistet, dass der Dichtvorsprung aus einer Ausgangsposition im Wesentlichen parallel zur ersten Wand verschwenkt wird.

Um die Rückstellkräfte zu erhöhen, kann benachbart zu dem Fußteil ein Stützsteg an der ersten Wand angeformt sein. Der Stützsteg kann dabei auf der zu einer Anlagekante gegenüberliegenden Seite an dem Fußteil angeordnet sein, wobei der Stützsteg vorzugsweise schräg zu der ersten Wand ausgerichtet ist.

Das Dichtungsprofil kann im Querschnitt im Wesentlichen trapezförmig ausgebildet sein, wobei die erste Wand länger als die zweite Wand ist. Die erste Wand kann dabei im Bereich des Fußteils auch stufenförmig ausgebildet sein und für eine Festlegung an dem Rahmenprofil entsprechende Rastmittel aufweisen. Die erste Wand und die zweite Wand sowie die Zwischenwände können dabei im Wesentlichen die gleiche Dicke besitzen, vorzugsweise sind die erste Wand, die zweite Wand und die Zwischenwände mit einer Wandstärke zwischen 0,5 mm und 6 mm, insbesondere 1 mm bis 4 mm, ausgebildet. Die erste Wand und die zweite Wand sowie die Zwischenwände können an ihren Oberflächen jeweils verhautet sein, um das Dichtungsprofil mit hoher Genauigkeit herzustellen. Das Dichtungsprofil besteht vorzugsweise aus einem elastischen Material, insbesondere einem Zell- oder Moosgummi.

Ferner wird erfindungsgemäß ein Rahmenprofil eines Rahmens oder einer T-Verbindung bereitgestellt, bei dem ein Dichtungsprofil vorgesehen ist. Das Dichtungsprofil kann in einem Eckbereich des Rahmens oder der T-Verbindung an der Außenseite eingeschnitten und winklig ausgerichtet sein. Dadurch kann das Dichtungsprofil mit kleinem Krümmungsradius im Eckbereich stark gebogen werden, so dass das Dichtungsprofil nur geringfügig in einen Innenbereich des Rahmens in dem Eckbereich hervorsteht. Der Einschnitt an dem Dichtungsprofil kann sich dabei durch die äußere erste Wand sowie zumindest teilweise durch die Zwischenwände erstrecken, um das Dichtungsprofil in einem engen Krümmungsradius biegen zu können. In dem Einschnitt des Dichtungsprofils ist vorzugsweise ein Eckelement angeordnet, das zur Ausrichtung des Dichtungsprofils dient. Das Eckelement kann dabei Vorsprünge aufweisen, die in Hohlkammern des Dichtungsprofils eingreifen. Ferner kann an dem Eckprofil mindestens ein Kanal zur Verteilung von Dichtmasse vorgesehen sein, die dann über das Eckelement in den Eckbereich eingespritzt werden kann.

Die Erfindung wird nachfolgend anhand mehrerer Ausführungsbeispiele mit Bezug auf die beigefügten Zeichnungen näher erläutert. Es zeigen:
- Figuren 1A und 1B: zwei perspektivische Ansichten eines Eckbereichs eines erfindungsgemäßen Rahmens;
- Figuren 2A bis 2C: mehrere Ansichten eines Eckbereiches einer erfindungsgemäßen T-Verbindung;
- Figuren 3A bis 3C: mehrere Schnittansichten durch ein Rahmenprofil mit eingezogenem Dichtungsprofil;
- Figur 4: eine Schnittansicht durch das Dichtungsprofil an dem Rahmenprofil;
- Figuren 5A und 5B: zwei Ansichten bei der Montage eines Eckelementes an dem Dichtungsprofil;

- Figuren 6A bis 6C: mehrere Schnittansichten durch ein Rahmenprofil im Bereich eines Eckelementes;
- Figuren 7A bis 7I: mehrere Ansichten eines Eckelementes für einen Rahmen oder eine T-Verbindung, und
- Figuren 8A bis 8C: mehrere Ansichten des Eckelementes der Figur 7 in Explosionsdarstellungen.

Ein Rahmen 1 umfasst ein erstes Rahmenprofil 2 und ein zweites Rahmenprofil 3, die winklig zueinander ausgerichtet sind, vorzugsweise rechtwinklig. Hierfür sind die Rahmenprofile 2 und 3 entlang einer Gehrungsfläche 4 aneinander anliegend.

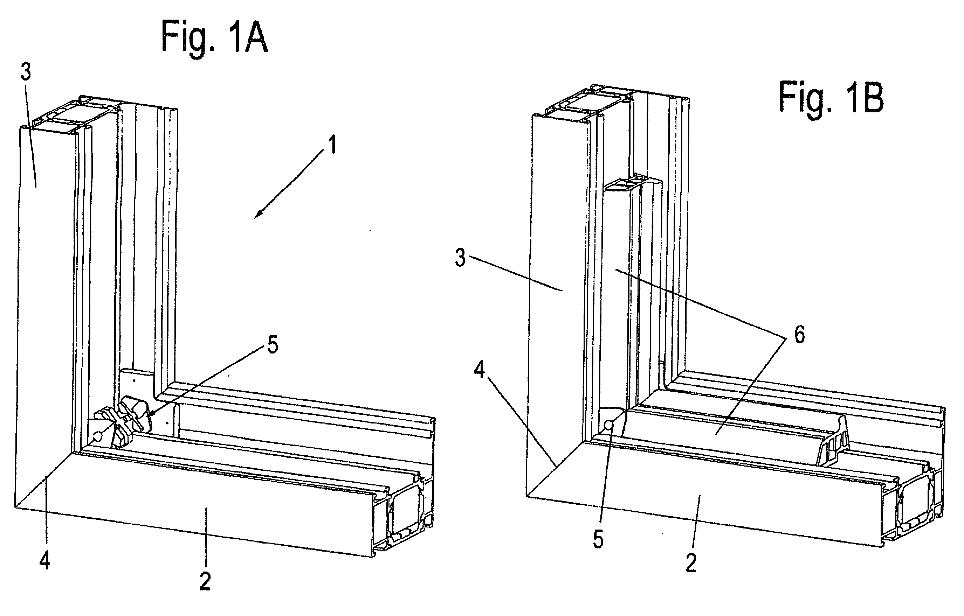

In Figur 1 B ist an dem Rahmenprofil 2 und dem Rahmenprofil 3 im Eckbereich ein Eckelement 5 gezeigt, das in der Verlängerung zu einem Dichtungsprofil 6 angeordnet ist, das sowohl an dem Rahmenprofil 2 als auch an dem Rahmenprofil 3 fixiert ist. Im Eckbereich ist das Dichtungsprofil 6 mit kleinem Radius umgebogen.

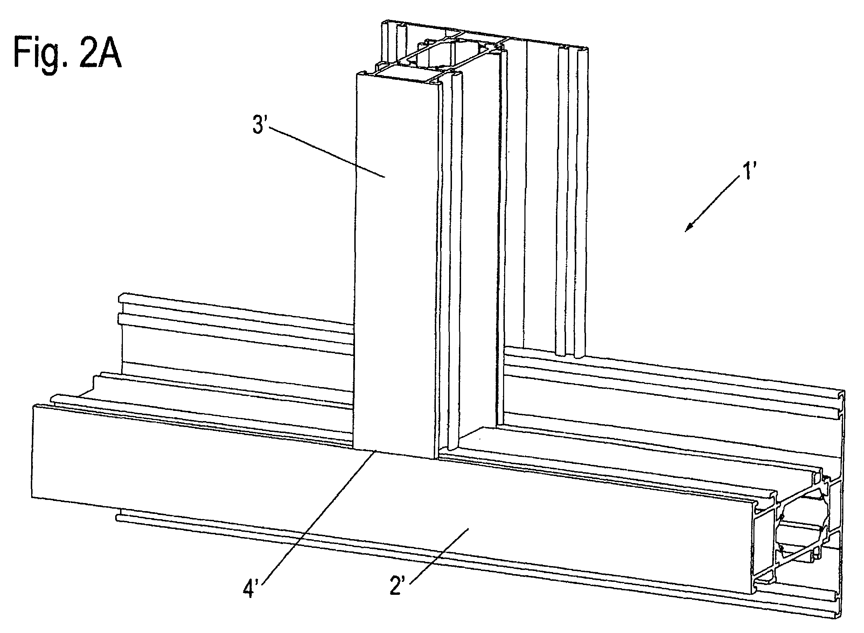

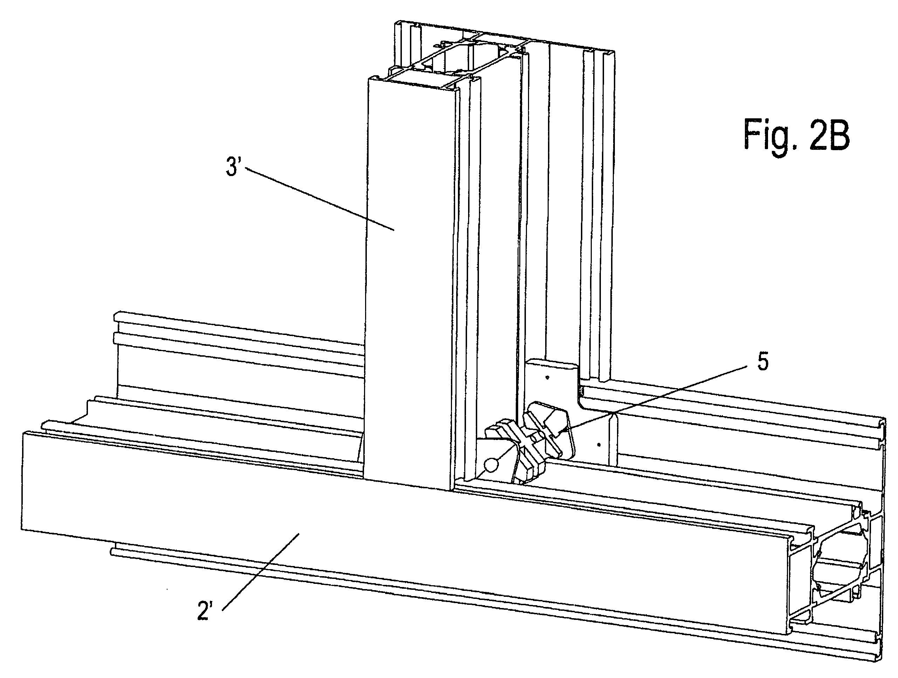

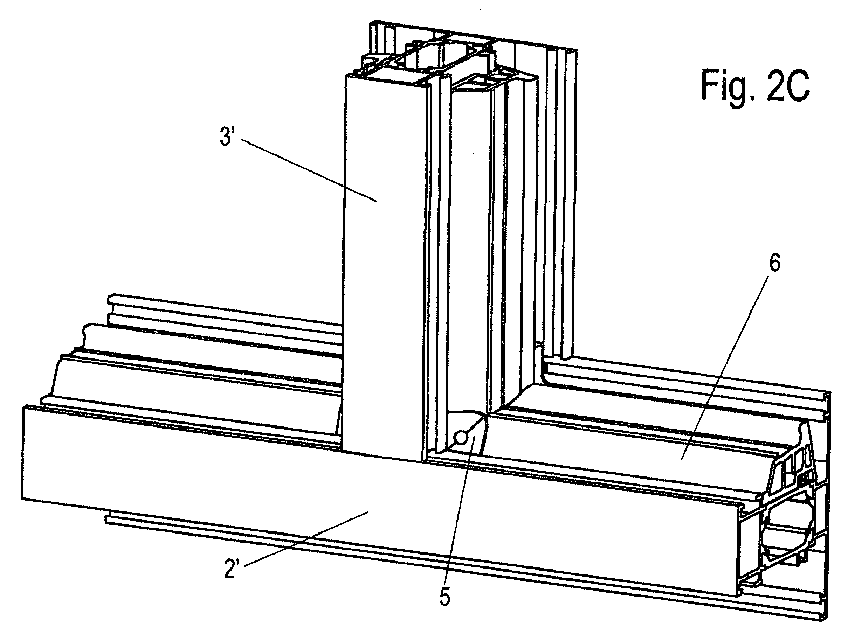

In Figur 2A ist eine T-Verbindung 1' dargestellt, bei der ein erstes Rahmenprofil 2' mit einem zweiten Rahmenprofil 3' verbunden ist, wobei die Rahmenprofile 2' und 3' rechtwinklig zueinander ausgerichtet sind. Das Rahmenprofil 3' ist stirnseitig an einer Stoßfläche 4' an dem Rahmenprofil 2' fixiert. Wie in Figur 2B gezeigt ist, kann auch in dem Eckbereich einer solchen T-Verbindung 1' ein Eckelement 5 montiert werden, mittels dem ein Dichtungsprofil 6 ausgerichtet werden kann. Das Dichtungsprofil 6 ist in Figur 2C an den Rahmenprofilen 2' und 3' fixiert und im Eckbereich rechtwinklig umgebogen.

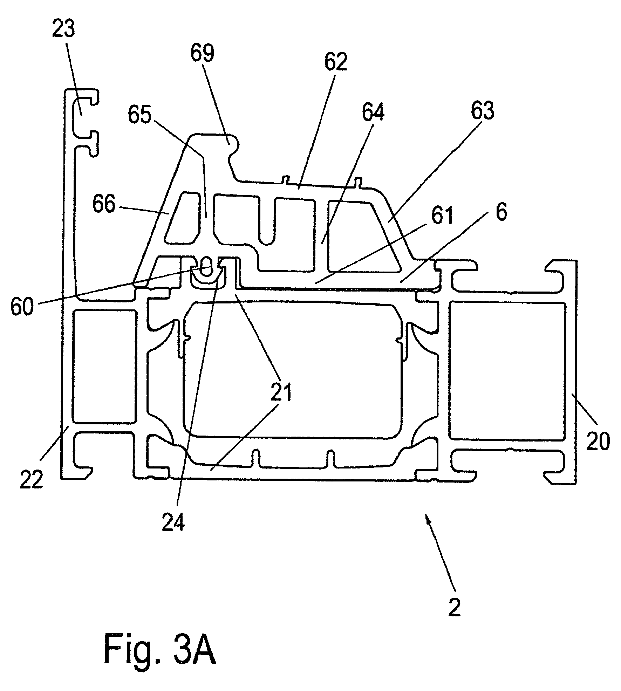

In Figur 3A ist das Dichtungsprofil 6 in einer am Rahmenprofil 2 montierten Position gezeigt. Das Rahmenprofil 2 ist baugleich zu dem Rahmenprofil 3 ausgebildet und auch die Rahmenprofile 2' und 3' können entsprechend ausgebildet sein. Das Rahmenprofil 2 umfasst eine Innenschale 20 aus Aluminium und eine Außenschale 22 aus Aluminium, die über Isolierstege 21 aus Kunststoff miteinander verbunden sind. An der Außenschale 22 ist eine Nut 23 für eine äußere Dichtung vorgesehen. Die Begriffe "innen" und "außen" beziehen sich auf die bevorzugte Einbausituation eines Fensters oder einer Tür mit einem Rahmenprofil 2, 3, 2' oder 3' und sind bei umgekehrten Einbau auch austauschbar.

An dem Isoliersteg 21 ist eine Nut 24 ausgebildet, in die ein Fußteil 60 des Dichtungsprofils 6 eingefügt ist und über die nach inneren gerichteten Stege der Nut 24 fixiert wird.

Das Dichtungsprofil 6 ist als Hohlkammerprofil ausgebildet und weist eine erste äußere Wand 61 und eine zweite innere Wand 62 auf, wobei an der inneren Wand 62 ein Dichtungsvorsprung 69 angeformt ist. Die innere Wand 62 ist mit der äußeren Wand 61 über mehrere Zwischenwände miteinander verbunden. Die Begriffe "innen" und "außen" beziehen sich hier auf den Eckbereich, in dem das Dichtungsprofil 6 umgebogen wird und daher radial innere und äußere Bereiche vorhanden sind.

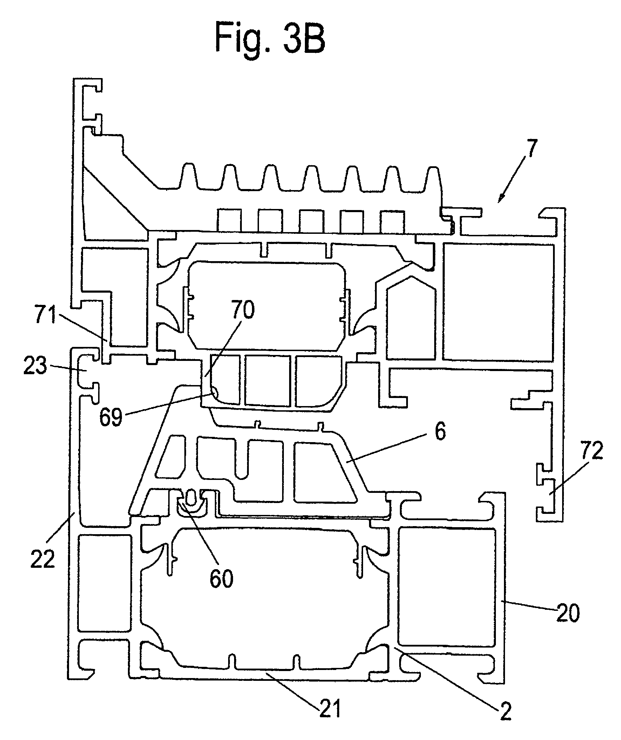

In Figur 3B ist das Rahmenprofil 2 der Figur 3A zusammen mit einem Flügelprofil 7 gezeigt, das relativ zu dem Rahmenprofil 2 bewegbar ist. Das Flügelprofil ist als wärmegedämmtes Verbundprofil ausgebildet und weist an seiner Außenseite eine Anlagefläche 71 auf, die mit einem Dichtungsprofil zusammenwirkt, das in der Nut 23 fixiert ist. Das Flügelprofil 7 weist an der Innenseite eine Nut 72 auf, an der eine Innendichtung eingezogen wird, die mit der Innenschale 20 des Rahmenprofils 2 zusammenwirkt, so dass das Dichtungsprofil 6 als Mitteldichtung ausgebildet ist, die zwischen einer äußeren und einer inneren Dichtung angeordnet ist. Das Dichtungsprofil 6 erstreckt sich im Wesentlichen über die Breite der Isolierstege 21.

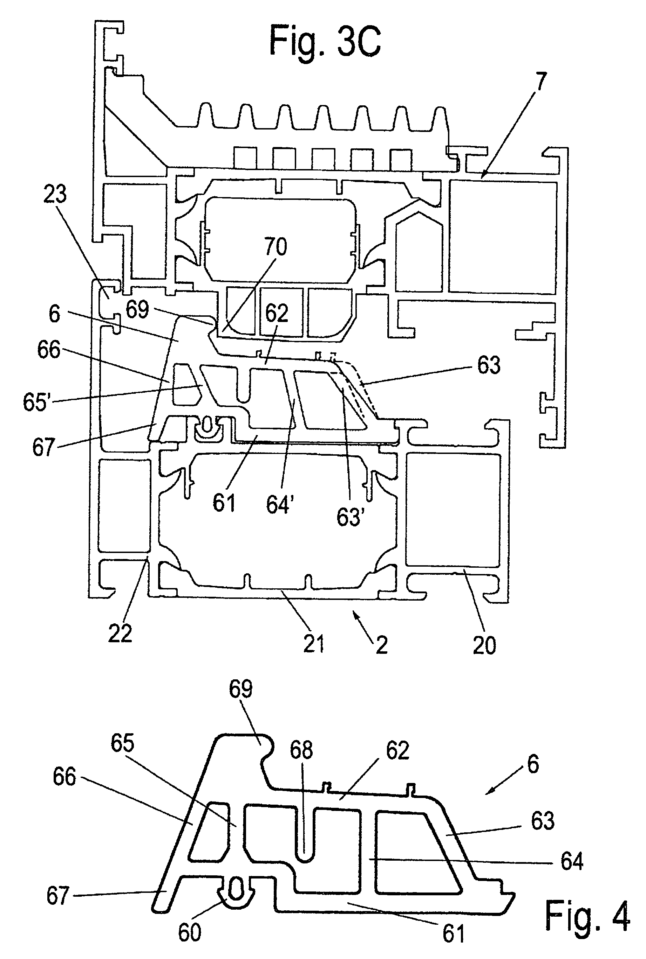

Das Dichtungsprofil 6 liegt mit dem Dichtvorsprung 69 an einem Block 70 an, der Teil eines Isoliersteges des Flügelprofils 7 ist. In der geschlossenen Position verformt der Block 70 das Dichtungsprofil 6, wie dies in Figur 3C gezeigt ist. Der Dichtungsvorsprung 69 liegt mit einer Dichtfläche an dem Block 70 an, wobei das Dichtungsprofil 6 im Bereich der inneren Wand 62 nach links in Figur 3C verschoben wurde. Hierfür ist die innere Wand 62 relativ zu der äußeren Wand 61 über die Zwischenwände 63, 64, 65 und 66 nach Art eines Parallelogrammlenkers verschiebbar, wobei in Figur 3C die Ursprungsposition der Zwischenwand 63 gestrichelt dargestellt ist und die verschwenkte Position mit 63'. Durch die Verbindung der inneren Wand 62 mit der äußeren Wand 61 über mehrere Zwischenwände 63, 64, 65 und 66 kann der Dichtungsvorsprung 69 mit geringen Federkräften in eine Richtung senkrecht zur Ebene eines Füllungselementes innerhalb des Flügelrahmens 7 verschoben werden.

In Figur 4 ist das Dichtungsprofil 6 im Detail dargestellt. Das Dichtungsprofil 6 besteht aus einem elastischen Material, insbesondere einem geschäumten Zell- oder Moosgummi, das an den Innenseiten verhautet ist. Das Dichtungsprofil 6 weist eine erste äußere Wand 61 und eine zweite innere Wand 62 auf, wobei der Begriff "außen" und "innen" sich auf einen Eckbereich eines Rahmens oder einer T-Verbindung beziehen, an der die äußere Wand 61 außen liegend und die innere Wand 62 innen liegend vorgesehen ist.

Die erste Wand 61 und die zweite Wand 62 sind über vier Zwischenwände 63, 64, 65, und 66 miteinander verbunden, wobei die Anzahl der Zwischenwände 63, 64, 65, 66 variiert werden kann, um die Anzahl der Hohlkammern in dem Dichtungsprofil 6 zu variieren. An der zweite Wand 62 ist ferner eine Trennwand 68 ausgebildet, die freihängend ausgebildet ist und sich nicht bis zu der äußeren Wand 61 erstreckt. An der erste Wand 61 ist ferner noch ein Fußteil 60 mit einem pilzkopfförmigen Querschnitt gezeigt, wobei die erste Wand 61 im Bereich des Fußteils 60 gestuft ausgebildet ist. Die erste Wand 61 kann beabstandet von dem Fußteil 60 noch an einer Nut des Rahmenprofils 2 fixiert werden, so dass ein Verschieben der ersten Wand 61 senkrecht zur Längsrichtung des Dichtungsprofils 6 sicher vermieden wird.

An der ersten Wand 61 und benachbart zu dem Fußteil 60 ist ein schräg nach außen verlaufender Stützsteg 67 vorgesehen, der das Dichtungsprofil 6 unterstützt, wenn der Dichtungsvorsprung 69 durch den Block 70 an dem Flügelrahmen 7 in eine geschlossene Position geschoben wird, wie dies in Figur 3C gezeigt ist.

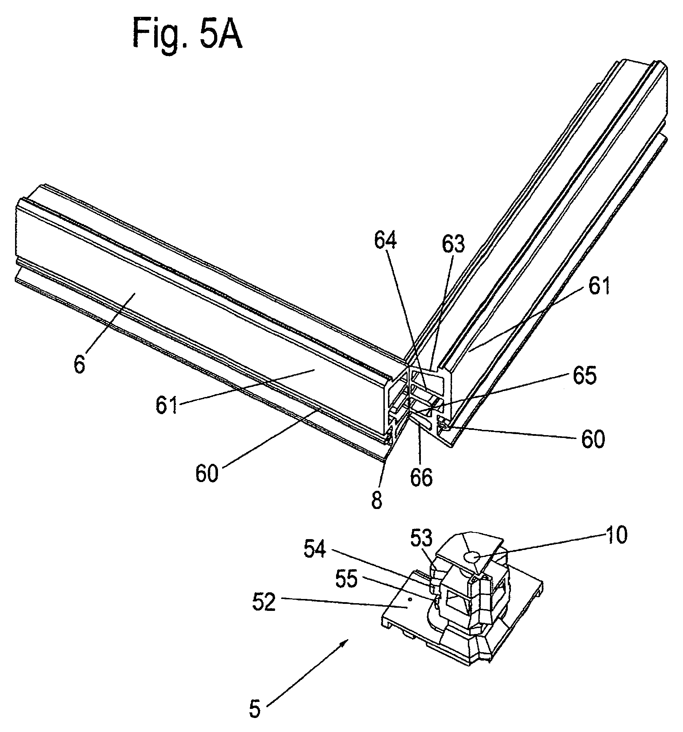

In Figur 5A ist das Dichtungsprofil 6 in einem Zustand bei der Montage gezeigt. Das Dichtungsprofil 6 wird in einem Eckbereich eingeschnitten, wobei zumindest die äußere Wand 61 durchtrennt wird, aber vorzugsweise auch ein Teil der Zwischenwände 63, 64, 65 und 66, die beispielsweise auch vollständig durchtrennt werden können. Lediglich die innere Wand 62 muss zumindest teilweise zusammenhängend verbleiben, so dass das Dichtungsprofil 6 nach dem Einschnitt winklig ausgerichtet werden kann, wie dies in Figur 5A gezeigt ist. Durch das Einschneiden und Knicken des Dichtungsprofils 6 werden die Hohlkammern geöffnet und in dem Eckbereich des Dichtungsprofils 6 wird ein Eckelement 5 angeordnet. Das Eckelement 5 ist im Wesentlichen durch einen quaderförmigen Steg gebildet, der winklig hervorstehende Vorsprünge 53, 54 und 55 aufweist, die in die einzelnen Hohlkammern des Dichtungsprofils 6 eingefügt werden können. Ferner weist das Eckelement 5 zwei rechtwinklig hervorstehende Platten 52 auf, die an einem Rahmenprofil 2, 3, 2', 3' fixiert werden können und zudem für die Verteilung einer Dichtmasse sorgen. Über einen Kanal 10 wird nach der Montage eine Dichtmasse in das Eckelement 5 injiziert.

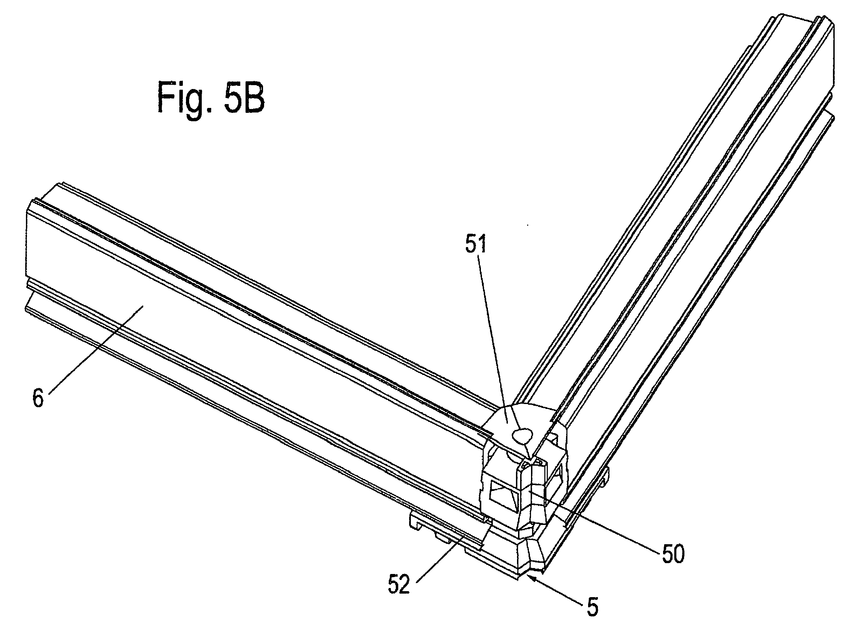

Wie in Figur 5B gezeigt ist, passt sich das Eckelement 5 im Wesentlichen formschlüssig an die eingeschnittenen Stirnkanten des Dichtungsprofils 6 an und verschließt diese. Eine Oberseite 51 des Eckelementes 5 ist im Wesentlichen flächenbündig mit einer Außenseite des Dichtungsprofils 6 ausgerichtet und die Vorsprünge 53, 54 und 55 sind in die Hohlkammern des Dichtungsprofils 6 eingefügt, so dass das Dichtungsprofil 6 über das Eckelement 5 in der winkligen Position vorfixiert gehalten ist.

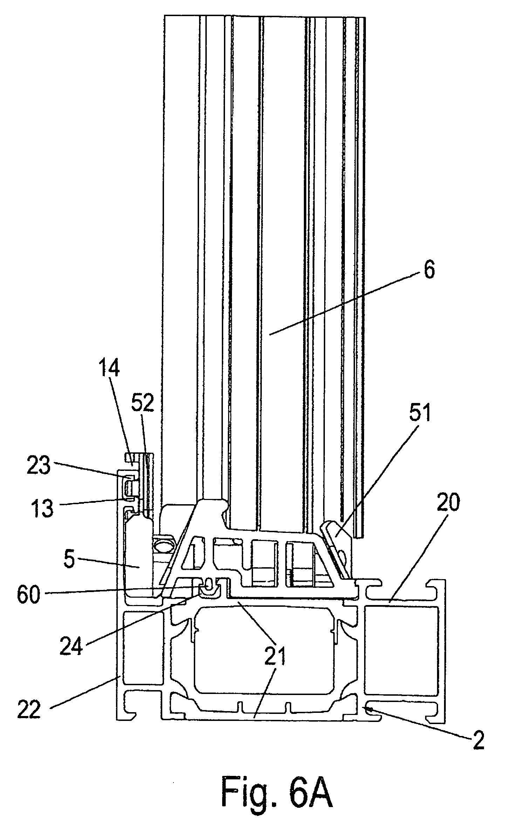

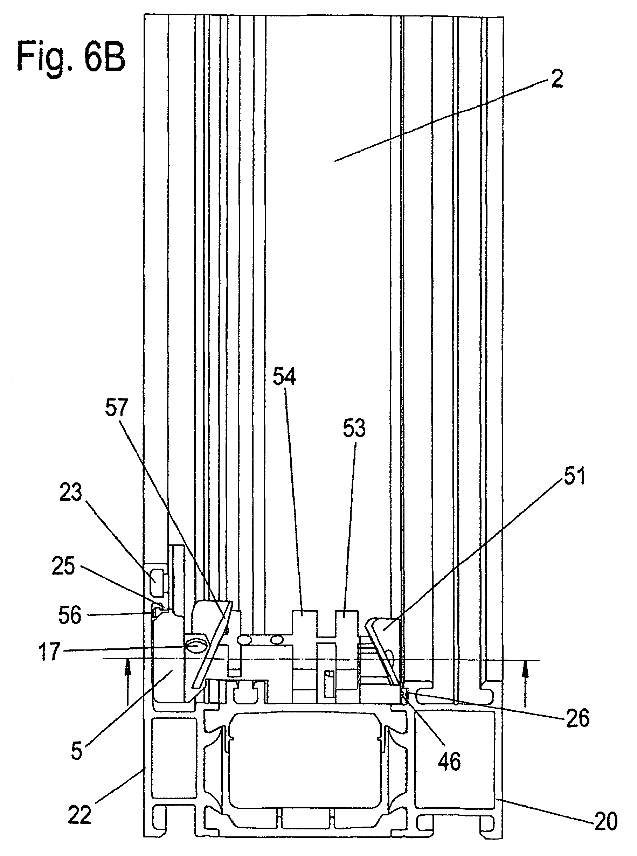

In Figur 6A ist das Dichtungsprofil 6 in einer am Eckelement 5 montierten Position gezeigt, wobei das Eckelement 5 an dem Rahmenprofil 2 fixiert ist. Die Platten 52 an dem Eckelement 5 weisen nutförmige Kanäle 13 und 14 auf, in die Stege der Nut 23 an der Außenschale 22 des Rahmenprofils 2 eingreifen. Wie in Figur 6B gezeigt ist, kann das Eckelement 5 zwischen der Außenschale 22 und der Innenschale 20 fixiert werden, wobei hierfür an dem Eckelement 5 benachbart zu der Oberseite 51 ein Rastelement 46 in eine Nut 26 an der Innenschale 20 eingreift. Auf der gegenüberliegenden Seite ist an dem Eckelement 5 ebenfalls ein Rastmittel 56 vorgesehen, das in eine Nut 25 an der Außenschale 22 eingreift. Die Rastmittel 46 und 56 in dem Eckelement 5 sind zumindest teilweise elastisch ausgebildet und ermöglichen ein Verrasten des Eckelementes 5 bei der Montage. Es ist auch möglich, das Eckelement 5 insgesamt aus einem Material mit einer gewissen Elastizität auszubilden oder zumindest einzelne Abschnitte aus einem elastischen Material vorzusehen.

An der Oberseite 51 stehen seitlich Stege 49 hervor, die das Dichtungsprofil 6 in der am Eckelement 5 montierten Position übergreifen. Das Dichtungsprofil 6 ist dann zwischen den Stegen 49 an der Oberseite 51 und einer am Eckelement 5 angeordneten Platte 57 klemmend fixiert.

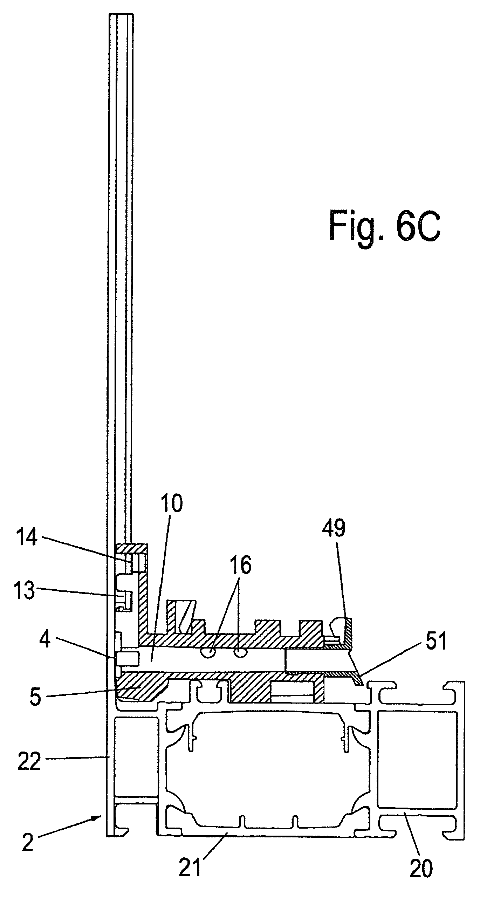

In Figur 6C ist ein Schnitt durch das Eckelement 5 gezeigt, wobei der Kanal 10 zum Verteilen von Dichtmasse erkennbar ist. Der Kanal 10 ist über einen oder mehrere Verteilungsabschnitte mit den Kanälen 13 und 14 verbunden, so dass an der Oberseite 51 injizierte Dichtmasse über den Kanal 10 im Eckbereich verteilt wird. Bei dem in Figur 6C gezeigten Ausführungsbeispiel mündet der Kanal 10 im Bereich der Gehrungsfläche 4 zweier Rahmenprofile 2 und 3, wobei über die Kanäle 13 und 14 auch eine Abdichtung im Bereich einer Stoßfläche 4' durch die Dichtmasse hergestellt werden kann. Ferner sind an dem Kanal 10 Öffnungen 16 auf der dem Dichtungsprofil 6 zugewandten Seite vorgesehen, um Dichtmasse auch in die Hohlkammern des Dichtprofils 6 einzuspritzen und diesen Bereich sicher abzudichten. Auf der von dem Dichtungsprofil 6 abgewandten Seite ist eine weitere Öffnung 18 an dem Kanal 10 vorgesehen, um auch in diesen Bereich Dichtmasse injizieren zu können.

Das Eckelement 5 besteht dabei vorzugsweise aus Kunststoff und kann formstabil in dem Eckbereich zweier Rahmenprofile 2 und 3 bzw. 2' und 3' fixiert werden, wobei für eine einfache Montage das Eckelement 5 über ein oder mehrere Rastmittel 46 und 56 verrastbar ist.

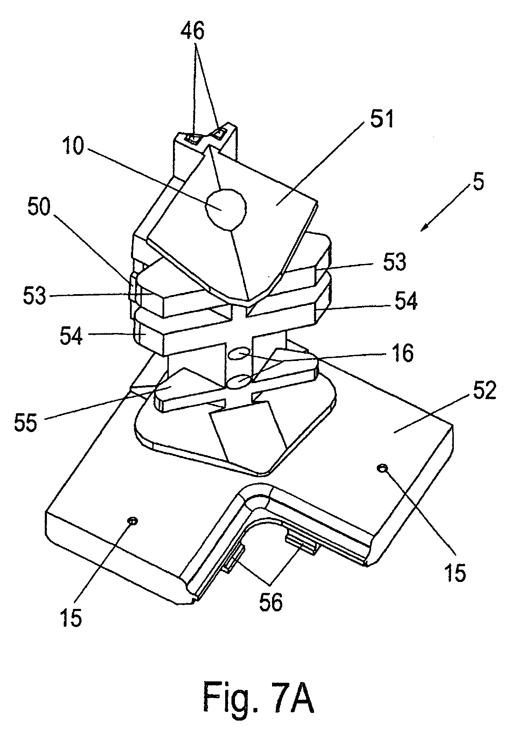

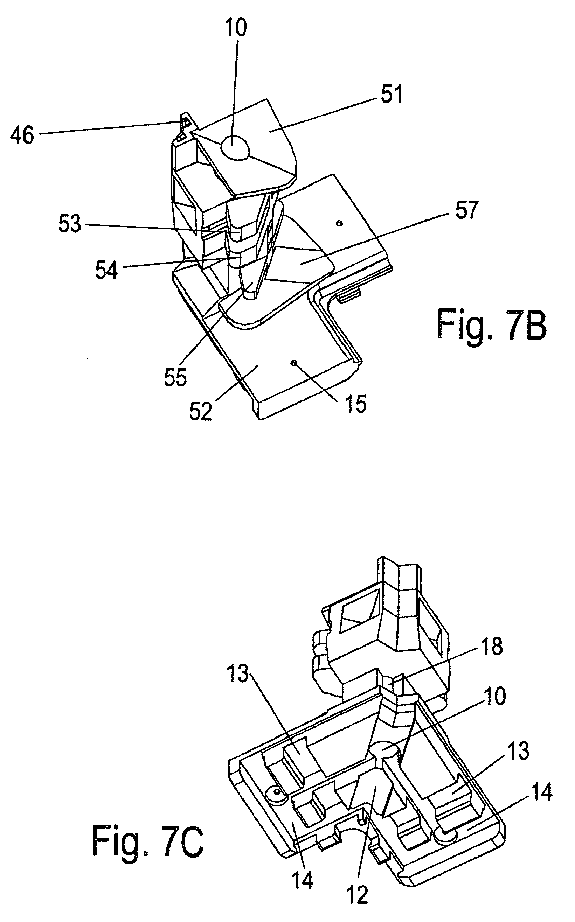

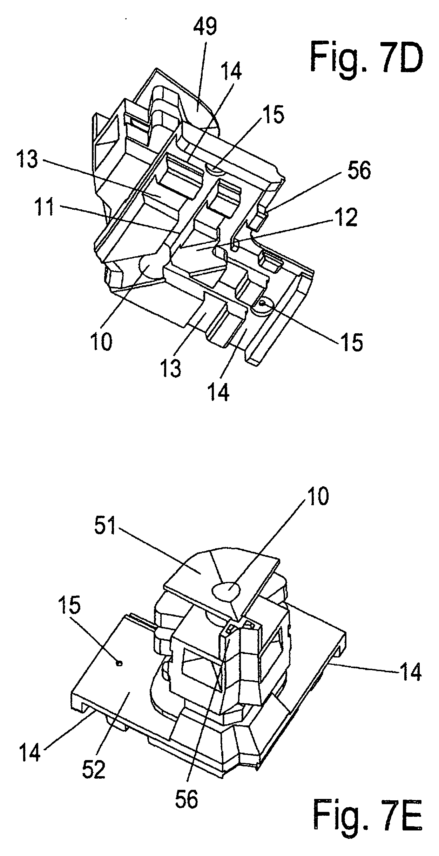

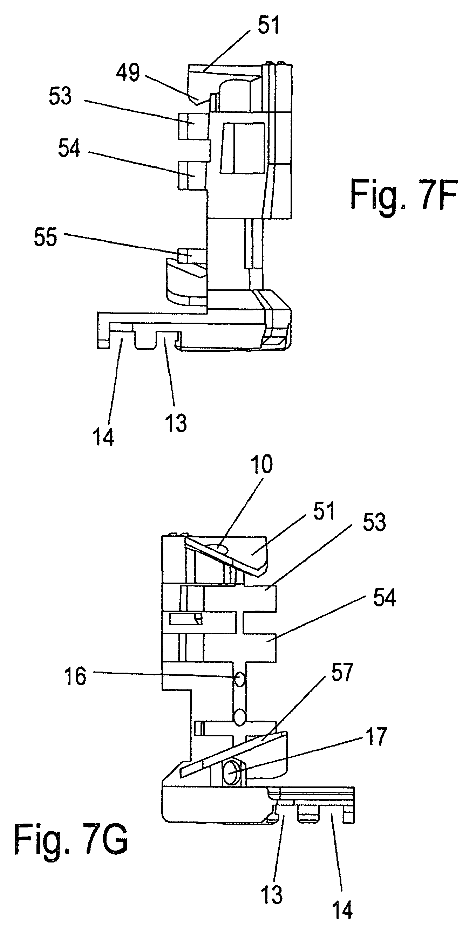

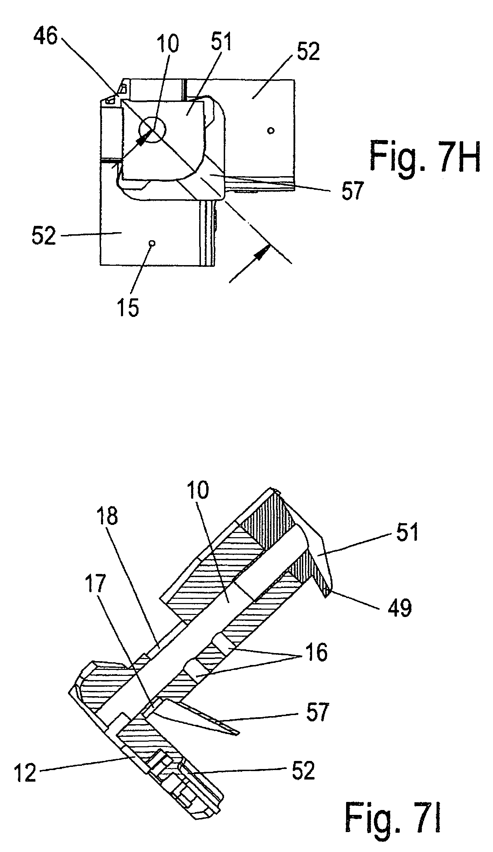

In den Figuren 7A bis 7I ist das Eckelement 5 im Detail gezeigt. Das Eckelement 5 umfasst an dem quaderförmigen Steg mehrere stegförmige Vorsprünge 53, 54 und 55, die in die Hohlkammern des Dichtungsprofils 6 einfügbar sind. Die Vorsprünge 53, 54, 55 sind dabei winklig ausgerichtet, vorzugsweise im Wesentlichen in einem rechten Winkel, um das Dichtungsprofil 6 in einer winkligen Position vorfixieren zu können. An einer Oberseite 51 des Eckelementes 5 ist eine Öffnung eines Kanals 10 ausgebildet, in den eine Düse zum Injizieren von Dichtmasse einfügbar ist. Die Dichtmasse wird dann über den Kanal 10 verteilt, wobei der Kanal 10 auf der gegenüberliegenden Seite im Bereich der Platten 52 angeordnet ist und dort über einen ersten Verteilungsabschnitt 12 Dichtmasse entlang der Gehrungsfläche 4 eines Rahmens 1 verteilt. Der erste Verteilungsabschnitt 12 ist über zwei nutförmige Verteilungsabschnitte 11 verbunden, die die Dichtmasse zu den nutförmigen Kanälen 13 und 14 transportieren. An dem Kanal 14 ist eine Öffnung 15 ausgebildet, die an der Oberseite der Platte 52 vorgesehen ist und die eine optische Kontrolle ermöglicht, ob ausreichend Dichtmasse in das Eckelement 5 injiziert wurde, denn bei einer ausreichenden Befüllung des Eckelementes 5 tritt Dichtmasse aus der Öffnung 15 heraus.

An dem Eckelement 5 sind ferner an gegenüberliegenden Seiten Rastelemente 55 und 56 ausgebildet, die an einem Rahmenprofil 2 an entsprechenden Stegen oder Nuten 26 und 25 verrastet werden können. In einem mittleren Bereich des Eckelementes 5 ist ferner eine Platte 57 vorgesehen, die spitz nach vorne zuläuft und eine Außenwand des Dichtungsprofils untergreift. Dadurch sind die Platten 52 beabstandet von den Dichtungsprofil 6 angeordnet. Zwischen den Platten 52 und der Platte 57 ist eine Aussparung 17 vorgesehen, die bei Bedarf zum Injizieren von Dichtmasse eingesetzt wird, indem die Bodenwand der Aussparung 17 durchbrochen wird, so dass dann eine Düse in den Kanal 10 eingefügt werden kann.

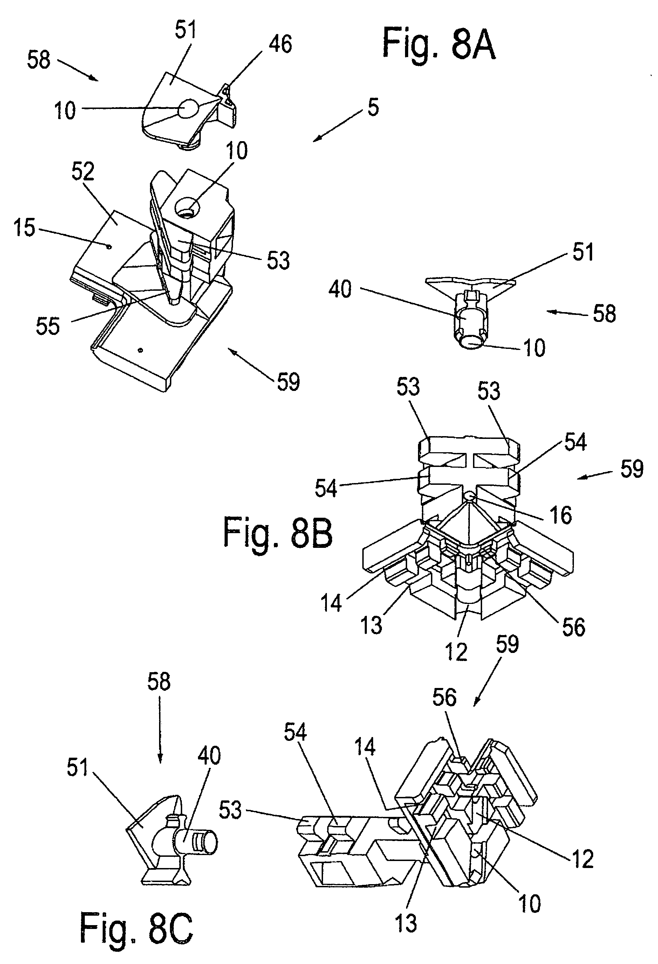

Wie in den Figuren 8A bis 8C gezeigt ist, ist das Eckelement 5 zweiteilig ausgebildet und umfasst ein erstes Teil 58 aus einem weicheren, elastischen Material und ein zweites Teil 59 aus einem eher formstabilen Material. Das erste Teil 58 aus weicherem Material ermöglicht ein Verrasten des Eckelementes 5 an einem Rahmenprofil 2, 3, 2', 3'. Das erste Teil 58 weist hierfür eine Hülse 40 auf, die in den Kanal 10 an dem zweiten Teil 59 eingesteckt werden kann, so dass nach der Montage das erste Teil 58 und das zweite Teil 59 fest miteinander verbunden sind.

Für die Montage eines Rahmens oder einer T-Verbindung wird ein Dichtungsprofil 6 im Bereich einer äußeren Wand 61 und vorzugsweise auch im Bereich der Zwischenwände 63, 64, 65 und 66 eingeschnitten und umgebogen bzw. umgeknickt. In dem eingeschnittenen Abschnitt wird dann ein Eckelement 5 eingefügt, wie dies in den Figuren 5A und 5B gezeigt ist. Das Eckelement 5 kann dabei wahlweise schon an einem Rahmen 1 oder einer T-Verbindung 1' vormontiert sein oder lose an dem Dichtungsprofil 6 montiert werden, damit dann die Einheit aus Dichtungsprofil 6 und Eckelement 5 an einem Rahmen 1 oder einer T-Verbindung 1' montiert werden kann. Nach der Montage des Dichtungsprofils 6 an dem Rahmen 1 oder der T-Verbindung 1' wird dann Dichtmasse in den Kanal 10 injiziert und in dem Eckelement 5 verteilt, um die Rahmenprofile 2, 3, 2', 3' entsprechend abzudichten.

Bei der Montage eines Rahmens wird das Dichtungsprofil 6 über vier Eckelemente 5 gehalten, wobei das Dichtungsprofil 6 vorzugsweise einstückig vorgesehen wird. Das Dichtungsprofil 6 liegt im Bereich der Endabschnitte mit den Stirnseiten aneinander an, um eine ausreichende Abdichtung zu erhalten. Optional ist es auch möglich, ein Verbindungselement an den Endabschnitten des Dichtungsprofils 6 vorzusehen.

### Bezugszeichenliste

- 1: Rahmen
- 1': T-Verbindung
- 2, 2', 3, 3': Rahmenprofil
- 4: Gehrungsfläche
- 4': Stoßfläche
- 5: Eckelement
- 6: Dichtungsprofil
- 7: Flügelprofil
- 10: Kanal
- 11: Verteilungsabschnitt
- 12: Verteilungsabschnitt
- 13: Kanal
- 14: Kanal
- 15: Öffnung
- 16: Öffnung
- 17: Aussparung
- 18: Öffnung
- 20: Innenschale
- 21: Isoliersteg
- 22: Außenschale
- 23: Nut
- 24: Nut
- 25: Nut
- 26: Nut
- 40: Hülse
- 46: Rastmittel
- 49: Stege
- 51: Oberseite
- 52: Platten
- 53: Vorsprung
- 54: Vorsprung
- 55: Vorsprung
- 56: Rastmittel
- 57: Platte
- 58: erstes Teil
- 59: zweites Teil
- 60: Fußteil
- 61: äußere Wand
- 62: innere Wand
- 63, 63': Zwischenwand
- 64: Zwischenwand
- 65: Zwischenwand
- 66: Zwischenwand
- 67: Stützsteg
- 68: Trennwand
- 69: Dichtungsvorsprung
- 70: Block
- 71: Anlagefläche
- 72: Nut

## Patentansprüche

1. Dichtungsprofil (6) für ein Rahmenprofil (2, 2', 3, 3'), insbesondere Mitteldichtung, mit einer ersten Wand (61), an der ein Fußteil (60) zur Fixierung an einem Rahmenprofil (2, 2', 3, 3') ausgebildet ist, und einer zweiten Wand (62), die von der ersten Wand (61) beabstandet angeordnet ist und über mehrere Zwischenwände (63, 64, 65, 66) mit der ersten Wand (61) verbunden ist, **dadurch gekennzeichnet, dass** an der zweiten Wand (62) ein wulstförmiger Dichtvorsprung (69) ausgebildet ist und die innere zweite Wand (62) mit dem wulstförmigen Dichtvorsprung (69) über die Zwischenwände (63, 64, 65, 66) relativ zu der ersten Wand (61) nach Art eines Parallelogrammlenkers verschiebbar gelagert ist.

2. Dichtungsprofil nach Anspruch 1, **dadurch gekennzeichnet, dass** der wulstförmige Dichtvorsprung (69) eine gerundete Anlagekante aufweist.

3. Dichtungsprofil nach Anspruch 1 oder 2, **dadurch gekennzeichnet, dass** der wulstförmige Dichtvorsprung (69) und das Fußteil (60) in Längsrichtung des Dichtungsprofils (6) gesehen auf derselben Seite des Dichtungsprofils (6) angeordnet sind.

4. Dichtungsprofil nach einem der vorhergehenden Ansprüche, **dadurch gekennzeichnet, dass** mindestens eine Trennwand (68) vorgesehen ist, die in einen Innenraum des Dichtungsprofils (6) hervorsteht und nur mit der ersten oder der zweiten Wand (61, 62) verbunden ist.

5. Dichtungsprofil nach einem der vorhergehenden Ansprüche, **dadurch gekennzeichnet, dass** eine Zwischenwand (65) im Wesentlichen senkrecht zu der ersten Wand (61) und der zweiten Wand (62) ausgerichtet ist und diese Zwischenwand (65) die einander zugewandten Seiten des wulstförmigen Dichtvorsprunges (69) mit dem Fußteil (60) verbindet.

6. Dichtungsprofil nach einem der vorhergehenden Ansprüche, **dadurch gekennzeichnet, dass** benachbart zu dem Fußteil (60) ein Stützsteg (67) an der ersten Wand (61) angeformt ist.

7. Dichtungsprofil nach einem der vorhergehenden Ansprüche, **dadurch gekennzeichnet, dass** das Dichtungsprofil (6) im Querschnitt im Wesentlichen trapezförmig ausgebildet ist, wobei die erste Wand (61) länger als die zweite Wand (62) ist.

8. Dichtungsprofil nach einem der vorhergehenden Ansprüche, **dadurch gekennzeichnet, dass** das Dichtungsprofil (6) aus einem Zell- oder Moosgummi hergestellt ist.

9. Rahmenprofil eines Rahmens (1), oder einer T-Verbindung (1'), **dadurch gekennzeichnet, dass** ein Dichtungsprofil (6) nach einem der Ansprüche 1-8 an dem Rahmen (2, 2', 3, 3') vorgesehen ist.

10. Rahmenprofil nach Anspruch 9, **dadurch gekennzeichnet, dass** das Dichtungsprofil (6) in einem Eckbereich des Rahmens (1) oder der T-Verbindung (1') an der Außenseite eingeschnitten und winklig ausgerichtet ist.

11. Rahmenprofil nach Anspruch 10, **dadurch gekennzeichnet, dass** an dem Einschnitt des Dichtungsprofils (6) ein Eckelement (5) angeordnet ist.

12. Rahmenprofil nach Anspruch 11, **dadurch gekennzeichnet, dass** ein Einschnitt vorgesehen ist, der durch die äußere erste Wand (61) und sich zumindest teilweise durch einen Bereich der Zwischenwände (63, 64, 65, 66) des Dichtungsprofils (6) erstreckt.

13. Rahmenprofil nach Anspruch 11, **dadurch gekennzeichnet, dass** das Eckelement (5) Vorsprünge (53, 54, 55) aufweist, die in Hohlkammern des Dichtungsprofils (6) eingefügt sind.

14. Rahmenprofil nach Anspruch 11 oder 13, **dadurch gekennzeichnet, dass** an dem Eckelement (5) mindestens ein Kanal (10) zum Verteilen von Dichtungsmasse ausgebildet ist.

## Claims

1. A sealing profile (6) for a frame profile (2, 2', 3, 3'), especially a middle seal, comprising a first wall (61) on which a foot portion (60) is formed for fixing to a frame profile (2, 2', 3, 3'), and a second wall (62) which is arranged spaced from the first wall (61) and is connected via several intermediate walls (63, 64, 65, 66) to the first wall (61), **characterized in that** a bead-shaped sealing projection (69) is formed on the second wall (62) and the inner second wall (62) with the bead-shaped sealing projection (69) is displaceably mounted via the intermediate walls (63, 64, 65, 66) relative to the first wall (61) in the manner of a parallelogram link.

2. A sealing profile according to claim 1, **characterized in that** the bead-shaped sealing projection (69) comprises a rounded contact edge.

3. A sealing profile according to claim 1 or 2, **characterized in that** the bead-shaped sealing projection (69) and the foot portion (60), as seen in the longitudinal direction of the sealing profile (6), are arranged on the same side of the sealing profile (6).

4. A sealing profile according to one of the preceding claims, **characterized in that** at least one separating wall (68) is provided, which protrudes into an interior space of the sealing profile (6) and is only connected to the first or second wall (61, 62).

5. A sealing profile according to one of the preceding claims, **characterized in that** an intermediate wall (65) is oriented substantially perpendicularly to the first wall (61) and the second wall (62), and said intermediate wall (65) connects the mutually facing sides of the bead-shaped sealing projection (69) to the foot portion (60).

6. A sealing profile according to one of the preceding claims, **characterized in that** a support web (67) is integrally formed on the first wall (61) adjacent to the foot portion (60).

7. A sealing profile according to one of the preceding claims, **characterized in that** the sealing profile (6) is substantially formed in a trapezoidal manner in the cross-section, wherein the first wall (61) is longer than the second wall (62).

8. A sealing profile according to one of the preceding claims, **characterized in that** the sealing profile (6) is made of cellular or sponge rubber.

9. A frame profile of a frame (1) or a T-connection (1'), **characterized in that** a sealing profile (6) according to one of the claims 1 to 8 is provided on the frame (2, 2', 3, 3').

10. A frame profile according to claim 9, **characterized in that** the sealing profile (6) is incised on the outside and oriented angularly in a corner region of the frame (1) or the T-connection (1').

11. A frame profile according to claim 10, **characterized in that** a corner element (5) is arranged on the incision of the sealing profile (6).

12. A frame profile according to claim 11, **characterized in that** an incision is provided which extends through the outer first wall (61) and at least partly through a region of the intermediate walls (63, 64, 65, 66) of the sealing profile (6).

13. A frame profile according to claim 11, **characterized in that** the corner element (5) comprises projections (53, 54, 55) which are inserted into the cavities of the sealing profile (6).

14. A frame profile according to claim 11 or 13, **characterized in that** at least one channel (10) for distributing sealing compound is formed on the corner element (5).

## Revendications

1. Profilé d'étanchéité (6) pour un profilé de cadre (2, 2', 3, 3'), en particulier joint central, avec une première paroi (61) sur laquelle une partie de pied (60) est formée pour la fixation à un profilé de cadre (2, 2', 3, 3') et avec une deuxième paroi (62) qui est disposée à distance de la première paroi (61) et qui est reliée par plusieurs cloisons intermédiaires (63, 64, 65, 66) à la première paroi (61), **caractérisé en ce qu'**une saillie d'étanchéité en forme de bourrelet (69) est formée sur la deuxième paroi (62) et la deuxième paroi intérieure (62) est supportée avec la saillie d'étanchéité en forme de bourrelet (69) avec possibilité de translation par-dessus les cloisons intermédiaires (63, 64, 65, 66) par rapport à la première paroi (61) à la manière d'un guidage à parallélogramme.

2. Profilé d'étanchéité selon la revendication 1, **caractérisé en ce que** la saillie d'étanchéité en forme de bourrelet (69) présente un bord d'appui arrondi.

3. Profilé d'étanchéité selon la revendication 1 ou 2, **caractérisé en ce que** la saillie d'étanchéité en forme de bourrelet (69) et la partie de pied (60) sont disposées, vues dans la longueur du profilé d'étanchéité (6), sur le même côté du profilé d'étanchéité (6).

4. Profilé d'étanchéité selon l'une des revendications précédentes, **caractérisé en ce qu'**il est prévu au moins une cloison de séparation (68) qui dépasse dans un espace intérieur du profilé d'étanchéité (6) et n'est reliée qu'à la première paroi ou à la deuxième (61, 62).

5. Profilé d'étanchéité selon l'une des revendications précédentes, **caractérisé en ce qu'**une cloison intermédiaire (65) est orientée de façon sensiblement perpendiculaire à la première paroi (61) et à la deuxième paroi (62) et cette cloison intermédiaire (65) relie les côtés tournés l'un vers l'autre de la saillie d'étanchéité en forme de bourrelet (69) à la partie de pied (60).

6. Profilé d'étanchéité selon l'une des revendications précédentes, **caractérisé en ce qu'**une barrette d'appui (67) est formée au voisinage de la partie de pied (60) sur la première paroi (61).

7. Profilé d'étanchéité selon l'une des revendications précédentes, **caractérisé en ce que** le profilé d'étanchéité (6) a une forme sensiblement trapézoïdale en section, la première paroi (61) étant plus longue que la deuxième paroi (62).

8. Profilé d'étanchéité selon l'une des revendications précédentes, **caractérisé en ce que** le profilé d'étanchéité (6) est fabriqué à partir d'un caoutchouc cellulaire ou mousse.

9. Profilé de cadre d'un cadre (1) ou d'un assemblage en T (1'), **caractérisé en ce qu'**un profilé d'étanchéité (6) selon l'une des revendications 1 à 8 est prévu sur le cadre (2, 2', 3,3').

10. Profilé de cadre selon la revendication 9, **caractérisé en ce que** le profilé d'étanchéité (6) est découpé sur la face extérieure et orienté en angle dans une zone de coin du cadre (1) ou de l'assemblage en T (1').

11. Profilé de cadre selon la revendication 10, **caractérisé en ce qu'**un élément d'angle (5) est disposé sur la découpe du profilé d'étanchéité (6).

12. Profilé de cadre selon la revendication 11, **caractérisé en ce qu'**il est prévu une découpe qui s'étend à travers la première paroi extérieure (61) et au moins en partie à travers une zone des cloisons intermédiaires (63, 64, 65, 66) du profilé d'étanchéité (6).

13. Profilé de cadre selon la revendication 11, **caractérisé en ce que** l'élément d'angle (5) présente des saillies (53, 54, 55) qui sont introduites dans des compartiments creux du profilé d'étanchéité (6).

14. Profilé de cadre selon la revendication 11 ou 13, **caractérisé en ce qu'**un canal (10) est formé sur l'élément d'angle (5) pour la répartition d'une pâte d'étanchéité.
